# EUROPEAN PATENT SPECIFICATION

(11) **EP 3 065 307 B1**
(45) Date of publication and mention of the grant of the patent: **21.02.2018**
(21) Application number: 15157281.5
(22) Date of filing: 03.03.2015
(51) Int. Cl.: H04B 7/0452, H04B 7/06, H04L 1/16

(54) **MU-MIMO group management**
MU-MIMO-GRUPPENVERWALTUNG
GESTION DE GROUPE MU-MIMO

(43) Date of publication of application: 07.09.2016
(73) Proprietor: Huawei Technologies Co., Ltd., Longgang District Shenzhen, Guangdong 518129 (CN)
(72) Inventor: Ezri, Doron, 80992 Munich (DE); Shilo, Shimi, 80992 Munich (DE); Weitzman, Avi, 80992 Munich (DE); Klausner, Ohad, 80992 Munich (DE); Sun, Fuqing, 80992 Munich (DE); Wei, Ruan, 80992 Munich (DE); Fan, Ronghu, 80992 Munich (DE)
(74) Representative: Kreuz, Georg Maria

(56) References cited:
- US-A1- 2008 311 939
- US-A1- 2013 107 916
- US-A1- 2013 301 569
- AUGER E ET AL: "TIME DOMAIN PRECODING FOR MIMO-OFDM SYSTEMS", INTERNATIONAL OFDM WORKSHOP, XX, XX, 31 August 2005 (2005-08-31), pages 1-05, XP009064369,

## Description

### TECHNICAL FIELD

The present invention relates to apparatuses and a method for transmitting data packets to wireless devices in a multi-user multiple-input and multiple-output (MU-MIMO) scheme. More particularly, the present invention relates to apparatuses and a method for deciding whether to maintain a MU-MIMO group or to form a different MU-MIMO group based on acknowledgement messages received from the wireless devices.

### BACKGROUND

MU-MIMO is a scheme in which multiple signals are transmitted from a transmitter to a multitude of wireless devices or from the multitude of wireless devices to the transmitter using the same time and frequency resources. In the MU-MIMO scheme, downlink transmission quality depends heavily on whether the transmission to each wireless device is orthogonal to the transmission to other wireless devices. Thus, in the optimum case, each wireless device in a MU-MIMO group sees (at its receive antenna or antennas) only the transmission aimed at itself and not the transmissions to other wireless devices of the MU-MIMO group.

US 2013/0107916 A1 discloses a method for facilitating and improving the performance of MU-MIMO transmission in wireless communication system.

"Time Domain Precoding for MIMO-OFDM Systems" (INTERNATIONAL OFDM WORKSHOP, 31 AUGUST 2005, pages 1-5) discloses a time domain based precoding method for removing Multi-stream interference, MSI.

US 2013/0301569 A1 discloses a method for transmitting acknowledgements in response to data packets in wireless communication.

US 2008/0311939 A1 discloses a method for retransmitting data sequence in response to a predetermined number of non-acknowledgement indications which received from one of the user equipment in Multi-user MIMO.

### SUMMARY

It is the object of the present invention to provide an apparatus and a method for advancing the state of the art.

According to a first aspect of the invention, the object of the present invention is solved by an apparatus having a plurality of transmit and/or a plurality of receive antennas, whereas an antenna can be configured to perform transmit and receive operations, the apparatus being configured to:
form a multi-user multiple-input and multiple-output, MU-MIMO, group, wherein the MU-MIMO group comprises a plurality of wireless devices;
transmit, using the plurality of transmit antennas, data packets to the plurality of wireless devices using the same time and frequency resources; and
decide whether to maintain the MU-MIMO group or to form a different MU-MIMO group, based on acknowledgement messages of the plurality of wireless devices;
wherein the apparatus (10) is a wireless local area network, WLAN, access point; and the apparatus (10) is configured to replace previously used frequency-domain precoders with time-domain precoders, if less than all but one of the wireless devices (12, 20, 22, 28) support delayed block acknowledgement, BA.
Thus, the apparatus determines whether the transmissions to the wireless devices of the MU-MIMO group are indeed orthogonal based on the acknowledgement messages of the plurality of wireless devices which are received in response to transmitting data packets to the plurality of wireless devices using the same time and frequency resources. For example, when all transmissions to the wireless devices are indeed orthogonal, only a small number or even none of the transmissions might fail and thus, it can be concluded that the MU-MIMO group has been well chosen.

While the present invention is in principle susceptible to any wireless communication environment, wherein a wireless access point transmits data to a plurality of wireless devices using a MU-MIMO scheme such as for example in WiMAX or LTE, it is particularly advantageous in an IEEE 802.11 WLAN environment and particularly in a IEEE 802.11 WLAN environment where a WLAN access point serves a plurality of wireless devices including legacy wireless devices that do not support specific MU-MIMO signaling.

According to a first implementation form of the first aspect according to the first aspect, the apparatus is further configured to apply time-domain precoders to received signals corresponding to the acknowledgement messages to separate acknowledgement messages from different wireless devices.

Using time-domain precoders allows assigning the received signals to the different wireless devices in cases where the wireless devices acknowledge reception of the data packets simultaneously, for example, when data packets are transmitted to the wireless devices simultaneously in the downlink and some or all of the wireless devices are to acknowledge the downlink transmission after a predefined time period, e.g., after a Short Inter-Frame Space (SIFS).

Replacing the frequency-domain precoders with the time-domain precoders allows transmitting data to the wireless devices in the downlink with high accuracy, using the frequency-domain precoders in the downlink, while enabling the assignment of the signals received in the uplink to the different wireless devices by using the time-domain precoders in the uplink.

According to a second implementation form of the first aspect according to the first aspect,
the time-domain precoders are time-domain equivalents of the frequency-domain precoders, or
the time-domain precoders are time-domain equivalents of the frequency-domain precoders with regard to their beamforming capabilities.

Having time-domain precoders that are time-domain equivalents of the frequency-domain precoders or time-domain equivalents of the frequency-domain precoders with regard to their beamforming capabilities increases the accuracy in assigning the received signals to the different wireless devices.

Thus, if two or more of the wireless devices do not support delayed BA, using the time-domain precoders allows to correctly differentiate between the two or more of the wireless devices that do not support delayed BA.

According to a third implementation form of the first aspect according to the first aspect or one of the first to the second implementation form of the first aspect, the plurality of transmit antennas are identical to the plurality of receive antennas.

Having identical transmit and receive antennas increases the uplink reception accuracy when applying, in the uplink, the time-domain equivalents of the frequency-domain precoders used in the downlink.

According to a fourth implementation form of the first aspect according to the first aspect or one of the first to the third implementation form of the first aspect, the apparatus is, if all or all but one of the wireless devices support delayed block acknowledgement, BA, configured to cause the plurality of wireless devices to transmit the acknowledgement messages, indicating reception of the data packets, sequentially by being configured to request delayed BA from all or from all but one of the wireless devices supporting delayed BA.

Requesting delayed BA allows avoiding collisions between acknowledgement messages of the wireless devices. For example, some wireless devices may support delayed acknowledgement ACK messages where the transmission of ACK messages is delayed until the apparatus sends a Delayed Block ACK (DELBA) request frame.

According to a fifth implementation form of the first aspect according to the first aspect or one of the first to the fourth implementation form of the first aspect, the apparatus is configured to form a different MU-MIMO group if a number of acknowledgement failures, as indicated by acknowledgement messages of the plurality of wireless devices, exceeds a threshold.

By analyzing the acknowledgement messages, it may be possible to find the wireless devices of the MU-MIMO group whose transmissions are not decoded correctly due to interference from other transmissions within the MU-MIMO group. Thus, analyzing the acknowledgement messages allows re-forming the MU-MIMO group to avoid transmissions which are not orthogonal between devices of the MU-MIMO group and hence reduce the number of devices who suffer from severe interference.

According to a sixth implementation form of the first aspect according to the fifth implementation form of the first aspect, the apparatus is configured to
remove a wireless device from the MU-MIMO group to form the different MU-MIMO group comprising wireless devices of the MU-MIMO group but not the removed wireless device, if a number of acknowledgement failures, as indicated by acknowledgement messages of the plurality of wireless devices, exceeds a threshold, or
replace a wireless device from the MU-MIMO group with another wireless device which is not in the MU-MIMO group to form the different MU-MIMO group comprising wireless devices of the MU-MIMO group but not the replaced wireless device, if a number of acknowledgement failures as indicated by acknowledgement messages of the plurality of wireless devices exceeds a threshold.

Thus, a wireless device of the MU-MIMO group whose transmission suffers from severe interference may be removed from the group or replaced with another wireless device to form a MU-MIMO group where the transmissions between the wireless devices and the apparatus do not suffer from severe interference, thereby increasing overall downlink transmission quality.

According to a seventh implementation form of the first aspect according to the first aspect or one of the first to the sixth implementation form of the first aspect, the apparatus is configured to maintain the MU-MIMO group or to form a different MU-MIMO group by adding a wireless device to the MU-MIMO group, if, for each wireless device, a number of acknowledgement failures, as indicated by the acknowledgement messages of the plurality of wireless devices, does not exceed the threshold.

Thus, the MU-MIMO group is maintained or enlarged when no severe interference occurs which makes it possible to form a MU-MIMO group that consists of wireless devices for which orthogonal transmissions can be ensured which increases downlink transmission efficiency.

According to an eighth implementation form of the first aspect according to the first aspect or one of the first to the seventh implementation form of the first aspect, the apparatus is configured to keep track of timing and received power of the plurality of wireless devices.

Keeping track of timing and received power of the plurality of wireless devices facilitates forming a MU-MIMO group and transmitting data packets to the wireless devices in the MU-MIMO group with high accuracy in the downlink.

According to a ninth implementation form of the first aspect according to the first aspect or one of the first to the eighth implementation form of the first aspect, the apparatus is configured to compute frequency-domain precoders for the plurality of wireless devices based on implicit and/or explicit feedback of the plurality of wireless devices.

Thus, the apparatus is not limited to serving wireless devices that do support explicit feedback but can also be applied to wireless devices that do only support implicit feedback such as for example legacy wireless devices.

According to a tenth implementation form of the first aspect according to the first aspect or one of the first to the ninth implementation form of the first aspect, the apparatus is configured to determine whether one or more wireless devices support delayed BA.

By determining whether one or more wireless devices support delayed BA, it is possible to decide whether collisions between acknowledgement messages can be avoided by using delayed BA or whether acknowledgement messages have to be assigned to the wireless devices by using time-domain precoders.

According to a second aspect of the invention, the object is solved by a method of managing a multi-user multiple-input and multiple-output group comprising a plurality of wireless devices, comprising:
transmitting, using a plurality of transmit antennas of a wireless local area, WLAN, access point, data packets to the plurality of wireless devices using the same time and frequency resources; deciding whether to maintain the MU-MIMO group or to form a different MU-MIMO group, based on acknowledgement messages of the plurality of wireless devices; and
wherein the method further comprises:
   replacing previously used frequency-domain precoders with time-domain precoders, if less than all but one of the wireless devices (12, 20, 22, 28) support delayed block acknowledgement, BA.

### BRIEF DESCRIPTION OF THE DRAWINGS

Further advantages and features of the invention will become apparent from the following description, in which the invention will be described on the basis of an implementation example with reference to the accompanying drawings, in which:
Fig. 1 is a schematic view of an exemplary wireless environment comprising the apparatus and a plurality of wireless devices; and
Fig. 2 is a flow diagram showing operations performed by the apparatus in the wireless environment.

### DETAILED DESCRIPTION OF IMPLEMENTATION EXAMPLES

For the purposes of promoting an understanding of the principles of the invention, reference will now be made to the implementation example illustrated in the drawings and specific language will be used to describe the same. It will, nevertheless, be understood that no limitation of the scope of the invention is thereby intended, the scope of the invention being solely determined by the appended claims.

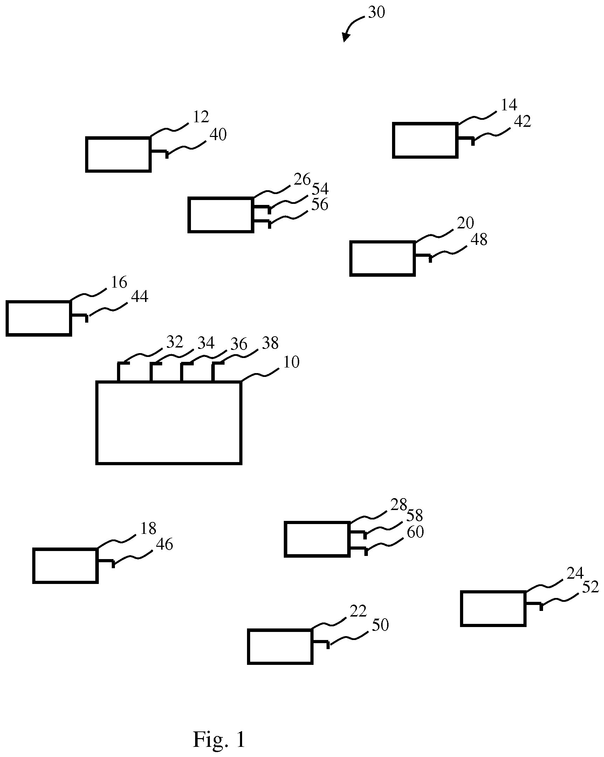

Fig. 1 shows the apparatus 10 and a plurality of wireless devices 12-28 in an exemplary wireless environment 30.

As shown in Fig. 1, the apparatus 10 comprises four antennas 32-38 and the wireless devices 12-28 comprise either one antenna 40-52 or two antennas 54-60. Moreover, the apparatus 10 uses all its antennas 32-38 for transmission of data to the wireless devices 12-28 and also uses all its antennas 32-38 for reception of data from the wireless devices 12-28. In turn, the wireless devices 12-28 use all their antennas 40-60 for reception of data from the apparatus 10 but only one antenna 40-54, 58 for transmission of data to the apparatus 10.

However, it is to note that while the apparatus 10 in the exemplary environment 30 has four antennas 32-38 and the wireless devices 12-28 have either one antenna 20-52 or two antennas 54-60, the apparatus 10 may also have less or more than four antennas 40-52 and the wireless environment 30 may also comprise wireless devices with more than two antennas 54-60, e.g. four antennas or eight antennas. Furthermore, the apparatus 10 may also use only some of its antennas 32-38 for transmission of data to the plurality of wireless devices 12-28 in the downlink and may also use only some of its antennas 32-38 for reception of data from the plurality of wireless devices 12-28 in the uplink. Moreover, the wireless devices 26 and 28 having two or more antennas 54-60 may also use all of their antennas for transmission of data to the apparatus 10 in the uplink.

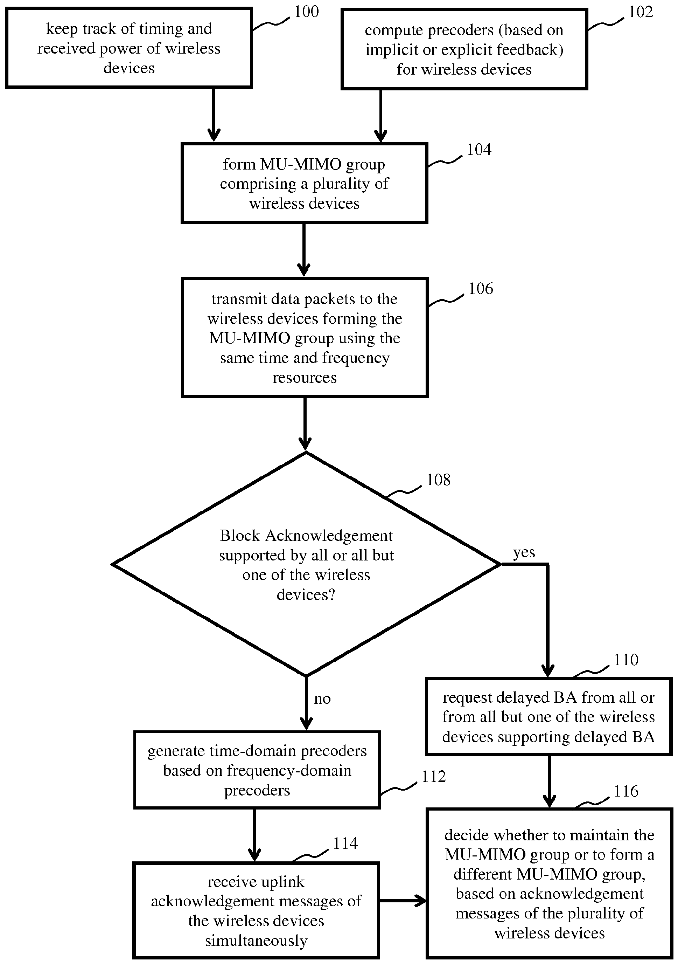

Fig. 2 is a flow diagram showing operations performed by the apparatus 10 in the wireless environment 30 to form and manage a MU-MIMO group.

At 100, the apparatus 10 keeps track of timing and received power of at least some of the wireless devices 12-28 in the wireless environment 30. For example, the apparatus 10 keeps track of timing and received power of at least wireless devices 12, 20, 22, and 28. Furthermore, at 102, the apparatus computes precoders of at least some of the wireless devices 12-28 based on either implicit or explicit feedback. For example, if apparatus 10 and wireless device 12 support IEEE 802.11ac, wireless device 20 supports IEEE 802.11a, wireless device 22 supports IEEE 802.11g and wireless device 28 supports IEEE 802.11n, the apparatus 10 may compute a frequency-domain precoder for the wireless device 12 based on explicit feedback and frequency-domain precoders for wireless devices 20, 22, and 28 based on implicit feedback.

As signals from wireless devices 12, 20, 22, and 28 are received at the apparatus 10 at relatively same power, with approximately same transmission time, and because the respective precoders suggest that their transmissions are approximately orthogonal, the apparatus 10 forms at 104 a MU-MIMO group comprising the wireless devices 12, 20, 22, and 28, which are referred to as "the MU-MIMO group" in the following.

At 106, the apparatus 10 transmits downlink data to the wireless devices 12, 20, 22, and 28 of the MU-MIMO group in a MU-MIMO fashion, such that the transmission is carried out simultaneously across the same frequency resources. Heretofore, the apparatus 10 is configured to transmit the downlink data in the form of data packets to the wireless devices 12, 20, 22, and 28 using its plurality of antennas 32-38 for beamforming. While apparatus 10 of the wireless environment 30 applies precoder-based beamforming, it is clear that the invention as such may also be put into practice with an apparatus having multiple directional antenna elements or phased array beamformers.

Unless supporting delayed BA and instructed accordingly, the wireless devices 12, 20, 22 and 28 will reply to the transmitted downlink data with an acknowledgement (ACK) message after an SIFS period. If at 108, the wireless devices 12, 20, 22 and 28 within the MU-MIMO group or alternatively all but one wireless device of the wireless devices 12, 20, 22 and 28 within the MU-MIMO group support delayed BA, the apparatus 10 may request at 110 that the wireless devices which support delayed BA respond with a delayed BA to the downlink transmission of the apparatus 10. The wireless devices 12, 20, 22 and 28, or in case of all but one wireless device supporting delayed BA the wireless devices 20, 22 and 28, may then try to acknowledge reception of the downlink data using the CSMA/CA mechanism, ensuring that the apparatus 10 will receive the uplink BAs separately, i.e. one after the other. In case of a collision, the wireless devices involved will re-transmit the uplink BAs.

Furthermore, even if less than all but one of the wireless devices 12, 20, 22 and 28 support delayed BA, the apparatus 10 may request that the wireless devices supporting delayed BA respond with a delayed BA to lessen the computational requirements imposed on the apparatus 10 by the alternative process described with reference to 112 and 114 in the following.

At 112, if less than all but one of the wireless devices 12, 20, 22 and 28 support delayed BA, the wireless devices not supporting delayed BA and/or not being instructed to apply delayed BA will acknowledge reception of the data packet after the SIFS period which immediately follows the completed reception of the downlink transmission.

In order to correctly detect the simultaneous ACK uplink transmission from the wireless devices not supporting delayed BA and/or not being instructed to use delayed BA, the apparatus 10 may generate at 112 time-domain precoders for the wireless devices not supporting delayed BA and/or not being instructed to apply delayed BA. I.e., the apparatus 10 may preferably generate the time-domain equivalents of the frequency-domain precoders that were used in the downlink transmission for each of the wireless devices that does not support delayed BA and/or has not been instructed to use delayed BA.

The apparatus 10 may then at 114 apply the time-domain precoders to the received uplink signals, i.e. the uplink ACKs, so that the apparatus 10 can separate and decode the signals from all wireless devices that do not support delayed BA and/or were not instructed to use delayed BA.

For example, if the wireless devices 12 and 20 do not support delayed BA, the apparatus 10 may instruct the wireless devices 22 and 28 that support delayed BA to use delayed BA and generate and apply time-domain precoders which are time-domain equivalents of the frequency-domain precoders of the wireless devices 12 and 20 that do not support delayed BA, to the uplink signals received after transmission of the downlink data to separate the ACKs of the wireless devices 12 and 20 which do not support delayed BA. Alternatively, the apparatus 10 may instruct none, one, or some of the wireless devices 22, 28 which support delayed BA to use delayed BA and generate and apply time-domain precoders to the uplink signals received immediately after transmission of the downlink data to separate the ACKs of the wireless devices 12 and 20 that do not support delayed BA and of the wireless devices that were not instructed to use delayed BA.

Once the apparatus 10 has successfully decoded the uplink ACK/BA transmissions from the wireless devices 12, 20, 22 and 28 (whether simultaneous and/or delayed), it needs to verify whether the transmission of data to the wireless devices 12, 20, 22 and 28 in the downlink was correctly received by the wireless devices 12, 20, 22 and 28. If all wireless devices 12, 20, 22 and 28 transmitted an ACK/BA, then the MU-MIMO group is considered to have been well chosen and the MU-MIMO group may be maintained. Alternatively, a further wireless device may be added to the MU-MIMO group to promote spectrum efficiency provided that the downlink transmission of data to the added wireless device proves to be orthogonal to the downlink transmissions of data to the wireless devices 12, 20, 22 and 28 of the MU-MIMO group.

If not all wireless devices 12, 20, 22 and 28 of the MU-MIMO group transmitted an ACK/BA, then there might be several reasons:
- a (legacy) wireless device may have more antennas than what the apparatus 10 has knowledge of, and this may cause multi-user interference (MUI);
- some of the wireless devices 12, 20, 22 and 28 of the MU-MIMO group may be located too close to each other; or
- an incidental interference has occurred.

Depending on the transmitted ACK/BA messages and in particular depending on the number of acknowledgement failures, as indicated by the ACK/BA messages of the plurality of wireless devices 12, 20, 22 and 28, the apparatus 10 may thus decide at 116 to maintain the MU-MIMO group or to form a different MU-MIMO group, for example by adding or removing one or several wireless devices from the MU-MIMO group or by replacing one or several wireless devices of the MU-MIMO group with one or several wireless devices that were not part of the MU-MIMO group.

Advantageously, this allow to manage the MU-MIMO group to comprise only wireless devices that receive downlink transmissions from the apparatus 10 that are orthogonal to each other so that the overall downlink transmission accuracy is increased.

The example described above and the drawings merely serve to illustrate the invention and its advantages over the prior art, and should not be understood as a limitation in any sense. The scope of the invention is solely determined by the appended set of claims.

## Claims

1. An apparatus (10) having a plurality of transmit antennas (32-38) and a plurality of receive antennas (32-38), the apparatus (10) being configured to:
form a multi-user multiple-input and multiple-output, MU-MIMO, group, wherein the MU-MIMO group comprises a plurality of wireless devices (12, 20, 22, 28);
transmit, using the plurality of transmit antennas (32-38), data packets to the plurality of wireless devices (12, 20, 22, 28) using the same time and frequency resources; and
decide whether to maintain the MU-MIMO group or to form a different MU-MIMO group, based on acknowledgement messages of the plurality of wireless devices (12, 20, 22, 28);
wherein the apparatus (10) is a wireless local area network, WLAN, access point; and
the apparatus (10) is configured to replace previously used frequency-domain precoders with time-domain precoders, if less than all but one of the wireless devices (12, 20, 22, 28) support delayed block acknowledgement, BA.

2. The apparatus (10) of claim 1, wherein the apparatus (10) is further configured to apply time-domain precoders to received signals corresponding to the acknowledgement messages to separate acknowledgement messages from different wireless devices (12, 20, 22, 28).

3. The apparatus (10) of claim 1,
wherein the time-domain precoders are time-domain equivalents of the frequency-domain precoders; or
wherein the time-domain precoders are time-domain equivalents of the frequency-domain precoders with regard to their beamforming capabilities.

4. The apparatus (10) of one of the preceding claims, wherein the plurality of transmit antennas (32-38) are identical to the plurality of receive antennas (32-38).

5. The apparatus (10) of one of claims 1 to 4, wherein, if all or all but one of the wireless devices (12, 20, 22, 28) support delayed block acknowledgement, BA, the apparatus (10) is configured to cause the plurality of wireless devices (12, 20, 22, 28) to transmit the acknowledgement messages, indicating reception of the data packets, sequentially by being configured to request delayed BA from all or from all but one of the wireless devices (22, 28) supporting delayed BA.

6. The apparatus (10) of one of the preceding claims, wherein the apparatus (10) is configured to form a different MU-MIMO group if a number of acknowledgement failures, as indicated by acknowledgement messages of the plurality of wireless devices (12, 20, 22, 28), exceeds a threshold.

7. The apparatus (10) of claim 6, wherein the apparatus (10) is configured to remove a wireless device (12, 20, 22, 28) from the MU-MIMO group to form the different MU-MIMO group comprising wireless devices (12,20,22,28) of the MU-MIMO group but not the removed wireless device (12, 20, 22, 28), if a number of acknowledgement failures, as indicated by acknowledgement messages of the plurality of wireless devices (12, 20, 22, 28), exceeds a threshold, or
wherein the apparatus (10) is configured to replace a wireless device (12, 20, 22, 28) from the MU-MIMO group with another wireless device (14-18, 24, 26) which is not in the MU-MIMO group to form the different MU-MIMO group comprising wireless devices (12, 20, 22, 28) of the MU-MIMO group but not the replaced wireless device (12, 20, 22, 28), if a number of acknowledgement failures as indicated by acknowledgement messages of the plurality of wireless devices (12, 20, 22, 28) exceeds a threshold.

8. The apparatus (10) of one of the preceding claims, wherein the apparatus (10) is configured to maintain the MU-MIMO group or to form a different MU-MIMO group by adding a wireless device (14-18, 24, 26) to the MU-MIMO group, if, for each wireless device (12, 20, 22, 28) of the MU-MIMO group, a number of acknowledgement failures, as indicated by the acknowledgement messages of the plurality of wireless devices (12, 20, 22, 28), does not exceed the threshold.

9. The apparatus (10) of one of the preceding claims, wherein the apparatus (10) is configured to keep track of timing and received power of the plurality of wireless devices (12, 20,22,28).

10. The apparatus (10) of one of the preceding claims, wherein the apparatus (10) is configured to compute frequency-domain precoders for the plurality of wireless devices (12, 20, 22, 28) based on implicit and/or explicit feedback of the plurality of wireless devices (12, 20,22,28).

11. The apparatus (10) of one of the preceding claims, wherein the apparatus (10) is configured to determine whether one or more wireless devices (22, 28) support delayed BA.

12. A method of managing a multi-user multiple-input and multiple-output, MU-MIMO, group comprising a plurality of wireless devices, comprising:
transmitting (106), using a plurality of transmit antennas (32-38) of a wireless local area network, WLAN, access point, data packets to the plurality of wireless devices (12, 20, 22, 28) using the same time and frequency resources;
deciding (116) whether to maintain the MU-MIMO group or to form a different MU-MIMO group, based on acknowledgement messages of the plurality of wireless devices (12, 20, 22, 28); and
wherein the method further comprises:
replacing previously used frequency-domain precoders with time-domain precoders, if less than all but one of the wireless devices (12, 20, 22, 28) support delayed block acknowledgement, BA.

## Patentansprüche

1. Gerät (10) mit einer Vielzahl von Übertragungsantennen (32-38) und einer Vielzahl von Empfangsantennen (32-38), wobei das Gerät (10) konfiguriert ist zum:
Bilden einer Mehrbenutzer-Mehreingang- und -Mehrausgang- bzw. MU-MIMO-Gruppe, wobei die MU-MIMO-Gruppe eine Vielzahl von drahtlosen Vorrichtungen (12, 20, 22, 28) umfasst;
Übertragen, unter Verwendung der Vielzahl von Übertragungsantennen (32-38), von Datenpaketen an die Vielzahl von drahtlosen Vorrichtungen (12, 20, 22, 28) unter Verwendung der gleichen Zeit- und Frequenz-Betriebsmittel; und
Entscheiden, ob die MU-MIMO-Gruppe beizubehalten ist oder eine andere MU-MIMO-Gruppe zu bilden ist, basierend auf Bestätigungsnachrichten der Vielzahl von drahtlosen Vorrichtungen (12, 20, 22, 28);
wobei das Gerät (10) ein Zugangspunkt eines drahtlosen Nahbereichsnetzwerks, WLAN, ist; und
das Gerät (10) konfiguriert ist, vorher verwendete Frequenzdomänen-Vorcodierer durch Zeitdomänen-Vorcodierer zu ersetzen, wenn weniger als sämtliche außer einer der drahtlosen Vorrichtungen (12, 20, 22, 28) verzögerte Blockbestätigung, BA, unterstützen.

2. Gerät (10) nach Anspruch 1, wobei das Gerät (10) ferner konfiguriert ist, Zeitdomänen-Vorcodierer auf empfangene Signale, die den Bestätigungsnachrichten entsprechen, anzuwenden, um Bestätigungsnachrichten von verschiedenen drahtlosen Vorrichtungen (12, 20, 22, 28) zu trennen.

3. Gerät (10) nach Anspruch 1,
wobei die Zeitdomänen-Vorcodierer Zeitdomänen-Äquivalente der Frequenzdomänen-Vorcodierer sind; oder
wobei die Zeitdomänen-Vorcodierer Zeitdomänen-Äquivalente der Frequenzdomänen-Vorcodierer hinsichtlich ihrer Strahlenformungsfähigkeiten sind.

4. Gerät (10) nach einem der vorstehenden Ansprüche, wobei die Vielzahl von Übertragungsantennen (32-38) zu der Vielzahl von Empfangsantennen (32-38) identisch ist.

5. Gerät (10) nach einem der Ansprüche 1 bis 4, wobei, wenn sämtliche oder sämtliche außer einer der drahtlosen Vorrichtungen (12, 20, 22, 28) verzögerte Blockbestätigung, BA, unterstützen, das Gerät (10) konfiguriert ist, zu bewirken, dass die Vielzahl von drahtlosen Vorrichtungen (12, 20, 22, 28) die Bestätigungsnachrichten, die Empfang der Datenpakete angeben, nacheinander überträgt, indem sie konfiguriert ist, verzögerte BA von sämtlichen oder von sämtlichen außer einer der drahtlosen Vorrichtungen (22, 28), die verzögerte BA unterstützen, anzufordern.

6. Gerät (10) nach einem der vorstehenden Ansprüche, wobei das Gerät (10) konfiguriert ist, eine andere MU-MIMO-Gruppe zu bilden, wenn eine Anzahl von Bestätigungsfehlern, wie durch Bestätigungsnachrichten der Vielzahl von drahtlosen Vorrichtungen (12, 20, 22, 28) angegeben, einen Schwellenwert übersteigt.

7. Gerät (10) nach Anspruch 6, wobei das Gerät (10) konfiguriert ist, eine drahtlose Vorrichtung (12, 20, 22, 28) aus der MU-MIMO-Gruppe zu entfernen, um die andere MU-MIMO-Gruppe zu bilden, umfassend die drahtlosen Vorrichtungen (12, 20, 22, 28) der MU-MIMO-Gruppe, aber nicht die entfernte drahtlose Vorrichtung (12, 20, 22, 28), wenn eine Anzahl von Bestätigungsfehlern, wie durch Bestätigungsnachrichten der Vielzahl von drahtlosen Vorrichtungen (12, 20, 22, 28) angegeben, einen Schwellenwert übersteigt, oder
wobei das Gerät (10) konfiguriert ist, eine drahtlose Vorrichtung (12, 20, 22, 28) aus der MU-MIMO-Gruppe durch eine andere drahtlose Vorrichtung (14-18, 24, 26), die nicht in der MU-MIMO-Gruppe ist, zu ersetzen, um die andere MU-MIMO-Gruppe zu bilden, umfassend die drahtlosen Vorrichtungen (12, 20, 22, 28) der MU-MIMO-Gruppe, aber nicht die ersetzte drahtlose Vorrichtung (12, 20, 22, 28), wenn eine Anzahl von Bestätigungsfehlern, wie durch Bestätigungsnachrichten der Vielzahl von drahtlosen Vorrichtungen (12, 20, 22, 28) angegeben, einen Schwellenwert übersteigt.

8. Gerät (10) nach einem der vorstehenden Ansprüche, wobei das Gerät (10) konfiguriert ist, die MU-MIMO-Gruppe beizubehalten oder eine andere MU-MIMO-Gruppe durch Hinzuzufügen einer drahtlosen Vorrichtung (14-18, 24, 26) zu der MU-MIMO-Gruppe zu bilden, wenn, für jede drahtlose Vorrichtung (12, 20, 22, 28) der MU-MIMO-Gruppe, eine Anzahl von Bestätigungsfehlern, wie durch die Bestätigungsnachrichten der Vielzahl von drahtlosen Vorrichtungen (12, 20, 22, 28) angegeben, den Schwellenwert nicht übersteigt.

9. Gerät (10) nach einem der vorstehenden Ansprüche, wobei das Gerät (10) konfiguriert ist, den Zeitablauf und die Empfangsleistung der Vielzahl von drahtlosen Vorrichtungen (12, 20, 22, 28) zu verfolgen.

10. Gerät (10) nach einem der vorstehenden Ansprüche, wobei das Gerät (10) konfiguriert ist, Frequenzdomänen-Vorcodierer für die Vielzahl von drahtlosen Vorrichtungen (12, 20, 22, 28) basierend auf der impliziten und/oder expliziten Rückmeldung der Vielzahl von drahtlosen Vorrichtungen (12, 20, 22, 28) zu berechnen.

11. Gerät (10) nach einem der vorstehenden Ansprüche, wobei das Gerät (10) konfiguriert ist, zu bestimmen, ob eine oder mehrere drahtlose Vorrichtungen (22, 28) verzögerte BA unterstützen.

12. Verfahren zum Verwalten einer Mehrbenutzer-Mehreingang- und -Mehrausgang- bzw. MU-MIMO-Gruppe, umfassend eine Vielzahl von drahtlosen Vorrichtungen, umfassend:
Übertragen (106), unter Verwendung einer Vielzahl von Übertragungsantennen (32-38) eines Zugangspunkts eines drahtlosen Nahbereichsnetzwerks, WLAN, von Datenpaketen an die Vielzahl von drahtlosen Vorrichtungen (12, 20, 22, 28) unter Verwendung der gleichen Zeit- und Frequenz-Betriebsmittel;
Entscheiden (116), ob die MU-MIMO-Gruppe beizubehalten ist oder eine andere MU-MIMO-Gruppe zu bilden ist, basierend auf Bestätigungsnachrichten der Vielzahl von drahtlosen Vorrichtungen (12, 20, 22, 28); und
wobei das Verfahren ferner umfasst:
Ersetzen vorher verwendeter Frequenzdomänen-Vorcodierer durch Zeitdomänen-Vorcodierer, wenn weniger als sämtliche außer einer der drahtlosen Vorrichtungen (12, 20, 22, 28) verzögerte Blockbestätigung, BA, unterstützen.

## Revendications

1. Appareil (10) comportant une pluralité d'antennes d'émission (32-38) et une pluralité d'antennes de réception (32-38), l'appareil (10) étant configuré pour :
former un groupe multi-entrée et multi-sortie multi-utilisateur, MU-MIMO, le groupe MU-MIMO comprenant une pluralité de dispositifs sans fil (12, 20, 22, 28) ;
transmettre, au moyen de la pluralité d'antennes d'émission (32-38), des paquets de données à la pluralité de dispositifs sans fil (12, 20, 22, 28) au moyen des mêmes ressources temps-fréquence ; et
décider s'il convient de maintenir le groupe MU-MIMO ou bien de former un groupe MU-MIMO différent, en fonction de messages d'acquittement de la pluralité de dispositifs sans fil (12, 20, 22, 28) ;
l'appareil (10) constituant un point d'accès de réseau local sans fil, WLAN ; et
l'appareil (10) étant configuré pour remplacer des précodeurs dans le domaine fréquentiel précédemment utilisés par des précodeurs dans le domaine temporel, si moins de la totalité sauf un des dispositifs sans fil (12, 20, 22, 28) admettent un acquittement de blocs, BA, différé.

2. Appareil (10) selon la revendication 1, l'appareil (10) étant configuré en outre pour appliquer des précodeurs dans le domaine temporel à des signaux reçus correspondant aux messages d'acquittement dans le but de séparer des messages d'acquittement provenant de dispositifs sans fil différents (12, 20, 22, 28).

3. Appareil (10) selon la revendication 1,
dans lequel les précodeurs dans le domaine temporel constituent des équivalents dans le domaine temporel des précodeurs dans le domaine fréquentiel ; ou
dans lequel les précodeurs dans le domaine temporel constituent des équivalents dans le domaine temporel des précodeurs dans le domaine fréquentiel en termes de leurs capacités de mise en forme de faisceaux.

4. Appareil (10) selon l'une des revendications précédentes, dans lequel la pluralité d'antennes d'émission (32-38) sont identiques à la pluralité d'antennes de réception (32-38).

5. Appareil (10) selon l'une des revendications 1 à 4, l'appareil (10) étant configuré, si la totalité ou la totalité sauf un des dispositifs sans fil (12, 20, 22, 28) admettent un acquittement de blocs, BA, différé, pour obliger la pluralité de dispositifs sans fil (12, 20, 22, 28) à transmettre les messages d'acquittement, indiquant la réception des paquets de données, de manière séquentielle en étant configuré pour demander un BA différé de la part de la totalité ou de la totalité sauf un des dispositifs sans fil (22, 28) admettant un BA différé.

6. Appareil (10) selon l'une des revendications précédentes, l'appareil (10) étant configuré pour former un groupe MU-MIMO différent si un nombre d'échecs d'acquittement, tel qu'indiqué par des messages d'acquittement de la pluralité de dispositifs sans fil (12, 20, 22, 28), dépasse un seuil.

7. Appareil (10) selon la revendication 6, l'appareil (10) étant configuré pour supprimer un dispositif sans fil (12, 20, 22, 28) du groupe MU-MIMO dans le but de former le groupe MU-MIMO différent comprenant les dispositifs sans fil (12, 20, 22, 28) du groupe MU-MIMO sauf le dispositif sans fil supprimé (12, 20, 22, 28), si un nombre d'échecs d'acquittement, tel qu'indiqué par des messages d'acquittement de la pluralité de dispositifs sans fil (12, 20, 22, 28) dépasse un seuil, ou
l'appareil (10) étant configuré pour remplacer un dispositif sans fil (12, 20, 22, 28) du groupe MU-MIMO par un autre dispositif sans fil (14-18, 24, 26) qui n'appartient pas au groupe MU-MIMO dans le but de former le groupe MU-MIMO différent comprenant les dispositifs sans fil (12, 20, 22, 28) du groupe MU-MIMO sauf le dispositif sans fil remplacé (12, 20, 22, 28), si un nombre d'échecs d'acquittement, tel qu'indiqué par des messages d'acquittement de la pluralité de dispositifs sans fil (12, 20, 22, 28) dépasse un seuil.

8. Appareil (10) selon l'une des revendications précédentes, l'appareil (10) étant configuré pour maintenir le groupe MU-MIMO ou bien pour former un groupe MU-MIMO différent en ajoutant un dispositif sans fil (14-18, 24, 26) au groupe MU-MIMO si, pour chaque dispositif sans fil (12, 20, 22, 28) du groupe MU-MIMO, un nombre d'échecs d'acquittement, tel qu'indiqué par les messages d'acquittement de la pluralité de dispositifs sans fil (12, 20, 22, 28) ne dépasse pas le seuil.

9. Appareil (10) selon l'une des revendications précédentes, l'appareil (10) étant configuré pour assurer un suivi de la synchronisation et de la puissance reçue de la pluralité de dispositifs sans fil (12, 20, 22, 28).

10. Appareil (10) selon l'une des revendications précédentes, l'appareil (10) étant configuré pour calculer des précodeurs dans le domaine fréquentiel pour la pluralité de dispositifs sans fil (12, 20, 22, 28) en fonction d'un feedback implicite et/ou explicite de la pluralité de dispositifs sans fil (12, 20, 22, 28).

11. Appareil (10) selon l'une des revendications précédentes, l'appareil (10) étant configuré pour déterminer si un ou plusieurs dispositifs sans fil (22, 28) admettent un BA différé.

12. Procédé de gestion d'un groupe multi-entrée et multi-sortie multi-utilisateur, MU-MIMO, comprenant une pluralité de dispositifs sans fil, le procédé comprenant les étapes consistant à :
transmettre (106), au moyen d'une pluralité d'antennes d'émission (32-38) d'un point d'accès de réseau local sans fil, WLAN, des paquets de données à la pluralité de dispositifs sans fil (12, 20, 22, 28) au moyen des mêmes ressources temps-fréquence ;
décider (116) s'il convient de maintenir le groupe MU-MIMO ou bien de former un groupe MU-MIMO différent, en fonction de messages d'acquittement de la pluralité de dispositifs sans fil (12, 20, 22, 28) ; et
le procédé comprenant en outre l'étape consistant à :
remplacer des précodeurs dans le domaine fréquentiel précédemment utilisés par des précodeurs dans le domaine temporel, si moins de la totalité sauf un des dispositifs sans fil (12, 20, 22, 28) admettent un acquittement de blocs, BA, différé.
